# FASCICULE DE BREVET EUROPEEN

(11) **EP 2 893 227 B1**
(45) Date de publication et mention de la délivrance du brevet: **05.10.2016**
(21) Numéro de dépôt: 13759514.6
(22) Date de dépôt: 09.09.2013
(51) Int. Cl.: F16J 15/32

(54) **JOINT CIRCULAIRE D'ETANCHEITE A BROSSE**
BÜRSTENARTIGE KREISFÖRMIGE DICHTUNG
BRUSH-TYPE CIRCULAR SEAL

(30) Priorité: 10.09.2012 FR 1258474
(43) Date de publication de la demande: 15.07.2015
(73) Titulaire: Commissariat à l'Énergie Atomique et aux Énergies Alternatives, 75015 Paris (FR); Technetics Group France SAS, 42000 Saint-Etienne (FR)
(72) Inventeur: GUIMET, Laurent, F-42240 Unieux (FR); SAUVINET, Frédéric, F-43000 Saint Etienne (FR); CONSTANT, Olivier, F-43110 Aurec sur Loire (FR); REYNAUD, Philippe, F-42210 Bellegarde En Forez (FR); MENGELLE, Christophe, F-42170 Saint Just - Saint Rambert (FR); LEFRANCOIS, Michel, F-42000 Saint Etienne (FR)
(74) Mandataire: Brevalex
(86) Numéro de dépôt international: PCT/EP2013/068547
(87) Numéro de publication internationale: WO 2014/037547

(56) Documents cités:
- EP-A1- 1 775 502
- EP-B1- 1 203 178
- US-A1- 2008 284 107
- US-A1- 2010 327 535

## Description

L'invention concerne un joint circulaire d'étanchéité à brosse, typiquement utilisé pour l'étanchéité entre deux compartiments pressurisés d'un turboréacteur (ou d'une turbomachine).

Les turboréacteurs présentent des compartiments tubulaires dans lesquels règnent des pressions différentes. Au travers de ces compartiments passe un unique arbre de rotor. Au passage de l'arbre entre lesdits compartiments, il importe donc d'assurer une étanchéité entre un stator (la structure des compartiments) et un rotor (l'arbre). Au vu des conditions extrêmes de ce type d'environnement (hautes températures, fortes dilatations différentielles radiales entre le rotor et le stator), une technologie adaptée est celle du joint à brosse, comme par exemple dans WO 2010/063269. Le joint à brosse a un niveau d'étanchéité suffisant pour de telles applications, peut tenir de hautes températures s'il est construit avec des matériaux adaptés, et a une bonne adaptabilité aux dilatations différentielles radiales.

Dans WO 2010/063269, le joint à brosse est constitué en section d'un jonc central autour duquel sont enroulés consécutivement le réseau de poils et une cage en forme de C ouvert sur son diamètre intérieur ; cette cage sert à maintenir et protéger ledit réseau. Dans une autre réalisation, présentée dans FR 2692019, le jonc central est remplacé par un joint à ressort entouré par des enveloppes, lui-même décrit dans FR 2151186, qui par son élasticité assure un contact intime entre le C et les surfaces en contact. Ceci est notamment très intéressant si le joint à brosse est entre deux morceaux de compartiments différents : il assure alors l'étanchéité entre les deux morceaux de compartiments vis-à-vis du milieu extérieur au turboréacteur. Usuellement, dans cette réalisation, le C est prolongé sur son diamètre intérieur par deux lamelles parallèles ayant pour mission de tenir la structure du réseau de poils jusqu'au plus près du rotor, afin d'éviter l'ébouriffage du réseau au contact dudit rotor.

Les conceptions visibles dans WO 2010/063269 ou FR 2692019 présentent un inconvénient commun : la refermeture du C se doit d'être effectuée selon les cas par estampage ou fluotournage, procédés donnant par nature des tolérances dimensionnelles larges. Ces larges tolérances amènent diverses contraintes dans la construction du turboréacteur.

Dans EP-A-1203178, l'inventeur utilise comme base une construction dans laquelle un joint à brosse avec jonc central et cage en C est lui-même monté dans un boîtier en deux parties, un sertissage assurant préférentiellement la liaison entre les deux parties dudit boîtier. Si ce boîtier serti présente l'avantage d'avoir des tolérances géométriques serrées, il a par contre l'inconvénient d'augmenter la taille de ce module de joint à brosse, ce qui le rend plus difficile à loger dans son environnement. Qui plus est, la hauteur de ce boîtier est dépendante de la hauteur initiale du C; le problème de tolérances larges n'est donc pas réglé quant à la hauteur.

Enfin, dans l'ensemble de ces constructions, on ne voit apparaître aucun élément assurant explicitement le maintien en rotation du joint à brosse. Celui-ci est systématiquement assuré via une compression axiale. Une perte de ladite compression en fonctionnement, du fait par exemple de dilatations différentielles, impliquerait donc une perte dudit maintien en rotation.

L'invention propose une construction de joint à brosse aux tolérances extérieures serrées et à l'encombrement réduit. Pour résumer, il s'agit d'un joint à brosse, duquel on retire la structure en C autour du réseau de poils, et où le réseau de poils est inséré directement dans un boîtier extérieur, fermé en principe par sertissage. Par sa construction, ce joint permet d'assurer l'étanchéité vis-à-vis de l'extérieur entre deux morceaux de compartiments différents enserrant ledit joint, et ce malgré l'absence du C. Un système permettant le maintien en rotation du joint dans son logement peut également être intégré.

Le boîtier circulaire comporte tout d'abord une première portion, dite « cage ». En section, cette cage comprend une partie cylindrique et un retour radial orienté vers l'intérieur ou l'extérieur selon que le boîtier entoure la brosse ou que la brosse entoure le boîtier; cette section évoque ainsi la forme d'un « L » majuscule.

La face interne dudit retour radial sert de face d'appui à une structure composite comprenant une âme centrale, autour de laquelle s'enveloppe le réseau de poils du joint à brosse. L'orientation des deux extrémités de chaque poil est la même que celle dudit retour radial (vers l'intérieur ou l'extérieur). La structure comprend au final deux diamètres : un diamètre formé par les extrémités des poils, ci-après dénommé « diamètre de brosse », et un autre dans la zone d'enroulement autour de l'âme, ci-après dénommé « diamètre lisse ».

Une seconde portion du boîtier, dite « cale », est ensuite insérée dans la cage inférieure, centrée sur la partie cylindrique de ladite cage. La face interne de cette cale vient en appui sur ladite structure composite. La position axiale de cette cale dans la cage est limitée par un contact axial, généralement métal-métal, entre deux surfaces planes en vis-à-vis dans chacune des deux pièces. On a de fait une tolérance précise sur la hauteur du boitier. La position de ce contact est également calculée de manière à générer une légère mise en compression de la structure composite, ce qui permet un bon maintien mécanique du réseau de poils, notamment grâce à l'élasticité du ressort qui fait partie de l'âme, dans certaines des meilleures réalisations de l'invention. Cette mise en compression est fiabilisée grâce audit contact métal-métal, et l'effort de réaction du ressort est répétable de pièce en pièce. Cette réaction élastique bien utilisée fiabilise le sertissage dans le temps.

La cale supérieure peut comprendre sur sa face externe au boîtier une partie axialement saillante. La fermeture du boîtier se fait par sertissage. Le haut de la partie cylindrique est replié sur la partie saillante, ce qui assure l'étanchéité du sertissage. On ferme ainsi un chemin de fuite généré par l'absence de structure en C autour du réseau de poils. En parallèle, on a optimisé l'encombrement via la suppression de cette même structure en C.

Un aspect important de l'invention consiste en l'optimisation de la géométrie des deux surfaces d'appui de ladite structure composite. Sur la cage comme sur la cale, on creuse axialement des baquets concaves sur lesdits retours radiaux plutôt que d'opter pour des surfaces d'appui rectilignes. En coupe, ceux-ci ont une forme d'arc. Le centre de chacun des arcs est préférentiellement situé sur un diamètre identique au diamètre moyen de l'âme. Le rayon de chaque arc est égal ou supérieur au plus grand rayon du réseau de poils, une fois ce dernier enroulé sur l'âme. La présence de ces baquets permet un auto-centrage de la structure composite autrement que par son diamètre lisse, avec un ajustement aux tolérances peu précises dans le boîtier. Les contraintes de cisaillement sur le réseau de poils sont également réduites. La tenue en rotation du réseau est également améliorée, car la zone de contact entre le réseau et les faces d'appui n'est pas que ponctuelle, mais s'étend sur une plus grande largeur.

Sur un assemblage réalisé avec ce perfectionnement, on peut s'autoriser à laisser du jeu entre le diamètre lisse de la structure composite et le diamètre en regard de la cage inférieure, ceci sans dégrader pour autant le centrage de la structure composite dans la cage. Ceci permet lors du sertissage d'éviter un contact radial de la structure composite avec la cage lors de l'écrasement du joint. Un tel contact aurait pour effet d'augmenter considérablement la raideur de l'âme quand elle est élastique et souple, amenant de fait un risque de rupture du sertissage.

Le joint une fois assemblé présente deux surfaces planes externes. Ceci permet d'insérer si nécessaire un dispositif d'anti-rotation du joint dans son logement, tel un trou non débouchant permettant d'accueillir une goupille de longueur supérieure à la profondeur dudit trou. Une fois cette goupille assemblée, elle dépassera et sera prête à s'insérer dans un trou du logement du joint, pour assurer finalement le maintien en rotation.

Dans un mode de réalisation préféré, la cale comme la cage comprennent chacune une lèvre à excroissance circulaire radiale orientée dans la même direction que les extrémités de poils. Ces excroissances enserrent le réseau de poils et permettent de maintenir le réseau de poils tout près de ses extrémités (dans la zone de contact avec le rotor) et donc d'éviter l'ébouriffage dudit réseau lors du fonctionnement du joint. Egalement, l'épaisseur du réseau de poils est maîtrisée, grâce au contact métal-métal précédemment cité, ce qui permet d'optimiser la performance en étanchéité de la brosse ainsi formée.

Ces excroissances peuvent être arrondies à l'extrémité de la zone de contact avec les poils afin de limiter un cisaillement et un risque de sectionnement de ceux-ci, s'ils sont amenés à être pliés axialement contre lesdites excroissances.

Le diamètre lisse du boîtier (à l'opposé de la brosse) peut être usiné de manière à permettre un frettage dans le logement et optimiser ainsi l'étanchéité entre le joint et ledit logement.

Enfin, dans certains cas, l'âme peut être choisie assez souple pour éviter une raideur trop importante, ayant pour effet d'empêcher le sertissage ou de sur-écraser les poils. Une telle âme souple pourrait être composée seulement d'une enveloppe circulaire ouverte à section en C, au lieu d'une telle enveloppe garnie d'un ressort à spires.

D'autres avantages et caractéristiques de l'invention apparaîtront à la lecture de la description d'un mode de réalisation de celle-ci, donné à titre d'exemple purement illustratif, en référence aux dessins annexés, dans lesquels :
- la Figure 1 représente une vue en coupe d'un tel joint conforme à l'invention, ici avec une brosse sur son diamètre intérieur ;

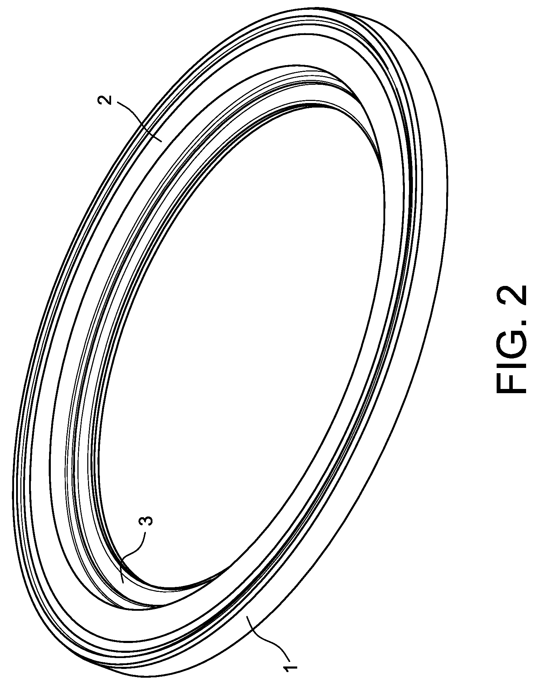

- la Figure 2 représente une vue en perspective du joint en brosse ;

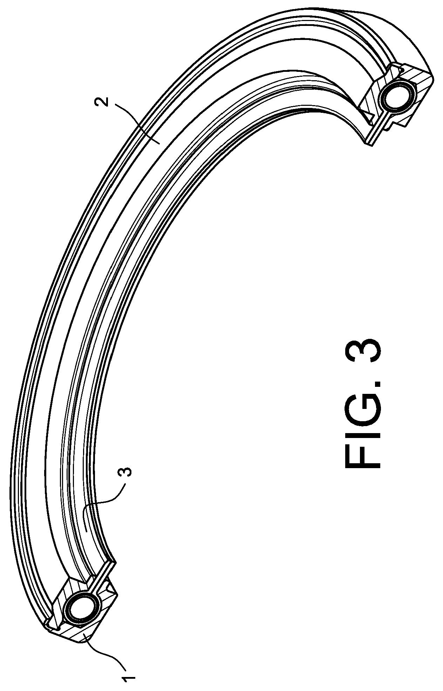

- et la Figure 3 représente une vue en coupe tridimensionnelle du joint à brosse.

Le joint à brosse représenté est circulaire autour d'un axe central 23. Il comprend tout d'abord une cage 1 inférieure (selon la représentation choisie ici pour les dessins). Il comprend encore une structure composite, composée d'une nappe de poils 3 et d'une âme 24. Cette dernière est ici à section creuse et composée d'un ressort 5 métallique à spires, enroulé en boucle autour du joint et d'une enveloppe 4 également métallique, à section ouverte en C, qui entoure et protège le ressort 5. De tels joints sont connus et vendus notamment sous la marque HELICOFLEX^{®}. L'invention les incorpore dans certaines de ses réalisations préférées; d'autres réalisations de l'âme, comprenant par exemple l'enveloppe 4 seule, ce qui donne une plus grande souplesse, sont possibles. La nappe de poils 3 a une partie enveloppante 20, enroulée autour de l'âme 24, et des brins 21 et 22 parallèles, dirigés radialement vers l'intérieur et responsables de l'étanchéité. Le diamètre le plus grand de l'enroulement 20 est appelé « diamètre lisse » et s'étend, quand le joint est assemblé, à peu de distance d'une face, interne au boîtier, d'une partie cylindrique 6 qui constitue une première partie de la cage 1.

Le boîtier est fermé par une cale 2 supérieure et qui est sertie dans la cage 1. La partie cylindrique 6 comporte pour cela un évidement à son extrémité supérieure, autour duquel elle subsiste sous forme d'une lèvre 7 plus fine. La cale 2 est en contact centré avec la partie cylindrique 6 de la cage 1 par une interface périphérique 6b de contact entre sa face de plus grand diamètre et la face interne de la lèvre 7, ainsi que par une interface de butée 15 d'extension radiale, avantageusement parfaitement plane, entre sa face inférieure et une face plane constituant le fond de l'évidement de la partie cylindrique 6. L'ajustement est assez précis pour établir une étanchéité du boîtier, grâce notamment à la planéité des faces appartenant à l'interface de butée 15, et d'autant plus que la cage 1 et la cale 2 sont généralement construites en métal, et donc rigides.

Les faces internes au boîtier sont en regard l'une de l'autre de la cage 1 et de la cale 2 sont formées concaves, en baquets 9 et 10, respectivement, de manière à retenir la structure composite. L'enroulement 20 a un diamètre plus grand que la distance entre des fonds 16 et 17 des baquets 9 et 10. Les baquets 9 et 10 sont symétriques et ont des rayons de courbure au moins égaux, et ici plus grands, que le rayon de l'enroulement 20. Enfin, les centres de courbure, ainsi que les fonds 16 et 17 des baquets 9 et 10 sont alignés avec le centre de l'enroulement 20 et de l'âme 24 pour chacune des sections du joint, et sont de préférence à une même distance de l'axe central 23. Grâce à cette constitution, la structure composite est maintenue à une position connue et répétitive pour chaque section et chaque joint construit de la même façon, l'enroulement 20 et l'âme 24 étant maintenus en place, en étant légèrement comprimés dans les fonds 16 et 17 des baquets 9 et 10. Ils se déforment en s'aplatissant légèrement, en occupant partiellement les baquets 9 et 10 et en s'élargissant, notamment vers la partie cylindrique 6. Le jeu radial 18 entre l'enroulement 20 et la partie cylindrique 6 permet toutefois une déformation sans contrainte excessive de la structure composite à l'intérieur du boîtier. Un jeu existe aussi à l'opposite du boîtier, du côté des brins 21 et 22. Cette compression est rendue possible dans de bonnes conditions par la souplesse et l'élasticité de l'âme 24 décrite ici.

La fermeture du boîtier se fait par sertissage, la lèvre 7 de la cage 1 étant repliée grâce à un outil sur la cale 2 en couvrant le bord de sa face externe au boîtier, opposée au baquet 10. Dans la zone de recouvrement, la cale 2 est conformée avec deux portions anguleuses 8a et 8b dont la dernière est saillante vers l'extérieur en direction de l'axe central (23) du joint. Lors de la fermeture de la lèvre 7 sur cette portion saillante, l'étanchéité du sertissage est garantie.

La cage 1 comprend un trou non débouchant 19 à sa face externe, qui est destiné à accueillir une goupille 27 de longueur supérieure à la profondeur de ce trou et qui sera donc saillante. Elle constituera un système d'arrêt en rotation du joint à brosse dans son logement.

La cage 1 et la cale 2 contiennent chacune une lèvre, respectivement 11 et 12, en excroissance aux diamètres intérieurs, et dont le rôle est de maintenir les brins 21 et 22 en place en les enserrant. La distance entre les lèvres 11 et 12 est définie par la butée à l'interface 15, ainsi que la densité des poils de brosse dans cette zone active. Les lèvres 11 et 12 présentent des arrondis 13 et 14 à leur arête adjacente aux poils afin d'éviter les risques de les cisailler s'ils sont fléchis à l'utilisation.

Le diamètre extérieur 25 de la cage 1 est une zone où l'étanchéité avec le futur logement du joint devra être assurée. Il pourra donc être usiné avec une précision suffisante pour permettre d'être fretté dans ce logement.

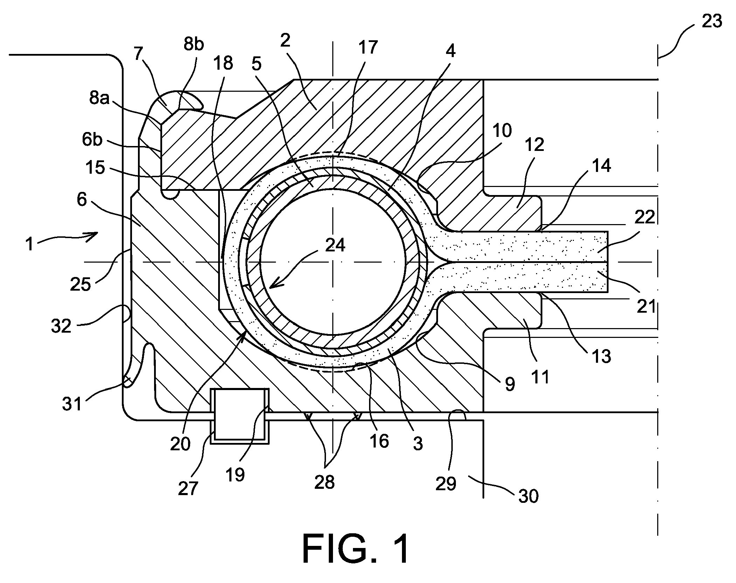

Le boîtier peut être équipé de moyens d'étanchéité à ses faces externes. La figure 1 illustre que la réalisation proposée ici comprend des couteaux 28, qui sont des lèvres à section triangulaire s'effilant vers l'extrémité libre, se dressant sur la face externe, plane, de la cage 1. Les couteaux 28 sont circulaires, concentriques et en appui sur une face en regard, plane elle aussi, 29 de la pièce 30 de support du joint quand celui-ci est monté. Et le diamètre extérieur 25 de la cage 1 (face périphérique) peut comprendre une lèvre flexible 31 saillant radialement vers l'extérieur et en appui sur une face alésée 32 de la pièce 30.

La déformation de ces reliefs de la cage 1 sur la pièce 30 assure donc l'étanchéité du joint en évitant les fuites autour de lui. Des joints toriques disposés aux mêmes endroits et logés dans des gorges de la cage 1 auraient le même effet.

## Revendications

1. Joint circulaire d'étanchéité composite à brosse, comprenant :
- un boîtier circulaire composé de deux portions serties, dont une première portion, dite cage (1), comprenant une partie cylindrique (6) et un retour radial joint à la partie cylindrique et comprenant une première face d'appui (9) radiale interne au boîtier, et une seconde portion, dite cale (2), centrée sur la partie cylindrique (6), d'extension radiale et comprenant une seconde face d'appui (10) interne au boîtier et en regard de la première face d'appui (9) ;
- une structure composite consistant en une âme interne (24) au boîtier et un réseau de poils disposé en un enroulement (20) autour de l'âme (24) et comprenant deux brins (21, 22) parallèles sortant du boîtier entre la cage (1) et la cale (2) ;
**caractérisé en ce que** :
- la partie cylindrique (6) et la cale (2) possèdent une interface (15) d'extension radiale de butée mutuelle ;
- l'enroulement (20) est en contact des faces d'appui (9, 10) ;
- et les faces d'appui (9, 10) sont incurvées en baquets concaves, ayant des rayons de courbure au moins égaux à celui de l'enroulement (20).

2. Joint à brosse selon la revendication 1, **caractérisé en ce que** l'âme (24) est métallique et à section creuse.

3. Joint à brosse selon la revendication 2, **caractérisé en ce que** l'âme est composée d'un ressort (5) à spires et d'une enveloppe (4) à section ouverte entourant le ressort.

4. Joint à brosse selon la revendication 1, 2 ou 3, **caractérisé en ce que** les baquets ont des fonds séparés d'une distance inférieure à un diamètre extérieur libre de l'enroulement à une position d'assemblage du boîtier, un jeu subsistant entre l'enroulement (20) et la partie cylindrique (6).

5. Joint à brosse selon la revendication 1, **caractérisé en ce que** les baquets sont symétriques et ont des fonds (16, 17) situés, de même qu'un centre de l'âme et de l'enroulement, à une même distance d'un axe central du joint.

6. Joint à brosse selon la revendication 1, **caractérisé en ce que** la cage et la cale comprennent chacune une lèvre (11, 12), les lèvres encadrant les brins de poils en s'étendant parallèlement entre elles et radialement à l'opposite de la partie cylindrique (6).

7. Joint à brosse selon la revendication 1, **caractérisé en ce que** la partie cylindrique comporte un évidement dont le fond est formé par l'interface (15) d'extension radiale de butée mutuelle, et qui est délimité par une lèvre (7) extrême de la partie cylindrique, la cale (2) étant entourée par la lèvre extrême et en contact avec elle par une interface périphérique (6b), la lèvre extrême étant courbée en couvrant un bord d'une face de la cale qui est opposé à la seconde face d'appui et externe au boîtier.

8. Joint à brosse selon la revendication 7, **caractérisé en ce que** la cale possède au moins une portion anguleuse (8b) à l'interface périphérique.

9. Joint à brosse selon la revendication 8, **caractérisé en ce que** la portion anguleuse est saillante en direction d'un axe central (23) du joint.

10. Joint à brosse selon la revendication 1, **caractérisé en ce que** l'interface (15) d'extension radiale de butée est plane.

11. Joint à brosse selon la revendication 1, **caractérisé en ce que** la première portion du boîtier comporte un trou (19) non débouchant de logement d'une goupille (27) d'arrêt en rotation du joint.

12. Joint à brosse selon la revendication 1, **caractérisé en ce que** le boîtier comporte des moyens d'étanchéité externes.

13. Joint à brosse selon la revendication 12, **caractérisé en ce que** les moyens d'étanchéité comprennent des reliefs saillants.

14. Joint à brosse selon la revendication 13, **caractérisé en ce que** les reliefs comprennent des couteaux (28) à section triangulaire.

15. Joint à brosse selon la revendication 13, **caractérisé en ce que** les reliefs comprennent une lèvre (31) déformable.

## Patentansprüche

1. Bürstenartige, kreisförmige Dichtung, umfassend:
- ein kreisförmiges Gehäuse, das aus zwei eingefassten Abschnitten besteht: aus einem ersten Abschnitt, als Käfig (1) bezeichnet, der einen zylindrischen Teil (6) umfasst, und eine mit dem zylindrischen Teil verbundene radiale Rückführung, und eine erste, zum Gehäuse radial innere Stützfläche (9) umfasst, und aus einem zweiten Abschnitt, als Keil (2) bezeichnet, der zum zylindrischen Teil (6) zentriert ist, sich radial erstreckt und eine zweite, zum Gehäuse und bezüglich der ersten Stützfläche (9) innere Stützfläche (10) umfasst;
- eine Verbundstruktur, bestehend aus einem zum Gehäuse inneren Kern (24) und einer Anordnung von Borsten, die in einer Windung (20) rund um den Kern (24) angeordnet sind und zwei parallele Stränge (21, 22) aufweisen, die zwischen dem Käfig (1) und dem Keil (2) aus dem Gehäuse austreten;
**dadurch gekennzeichnet, dass**:
- der zylindrische Teil (6) und der Keil (2) eine sich radial erstreckende Schnittstelle (15) mit gegenseitiger Anlagerung aufweisen;
- die Windung (20) die Stützflächen (9, 10) berührt;
- und die Stützflächen (9, 10) zu konkaven Schalen gebogen sind, die Krümmungsradien aufweisen, welche wenigstens denen der Windung (20) entsprechen.

2. Bürstenartige Dichtung nach Anspruch 1, **dadurch gekennzeichnet, dass** der Kern (24) aus Metall ist und einen hohlen Abschnitt aufweist.

3. Bürstenartige Dichtung nach Anspruch 2, **dadurch gekennzeichnet, dass** der Kern eine Feder mit Windungen (5) und eine die Feder umgebende Umhüllung (4) mit offenem Abschnitt umfasst.

4. Bürstenartige Dichtung nach Anspruch 1, 2 oder 3 **dadurch gekennzeichnet, dass** die Schalen getrennte Böden mit einem kleineren Abstand aufweisen als ein freier Außendurchmesser der Windung an einer Montageposition des Gehäuses, wobei zwischen der Windung (20) und dem zylindrischen Teil (6) ein Spiel frei bleibt.

5. Bürstenartige Dichtung nach Anspruch 1, **dadurch gekennzeichnet, dass** die Schalen symmetrisch sind und Böden (16, 17) aufweisen, die den gleichen Abstand zu einer Mittelachse der Dichtung aufweisen wie ein Mittelpunkt des Kerns und der Windung.

6. Bürstenartige Dichtung nach Anspruch 1, **dadurch gekennzeichnet, dass** der Käfig und der Keil jeweils eine Lippe (11, 12) aufweisen, wobei die Lippen die Borstenstränge umgeben, wobei sie sich parallel zueinander und radial gegenüber dem zylindrischen Teil (6) erstrecken.

7. Bürstenartige Dichtung nach Anspruch 1, **dadurch gekennzeichnet, dass** der zylindrische Teil eine Aussparung aufweist, deren Boden durch die sich radial erstreckende Schnittstelle (15) mit gegenseitiger Anlagerung gebildet ist, und die durch eine äußerste Lippe (7) des zylindrischen Teils begrenzt ist, wobei der Keil (2) von der äußersten Lippe umgeben und über eine Umfangsschnittstelle (6b) mit ihr in Berührung ist, wobei die äußerste Lippe gekrümmt ist und den Rand einer Fläche des Keils bedeckt, die gegenüber der zweiten äußeren Stützfläche des Gehäuses liegt.

8. Bürstenartige Dichtung nach Anspruch 7, **dadurch gekennzeichnet, dass** der Keil wenigstens einen winkligen Abschnitt (8b) an der Umfangsschnittstelle umfasst.

9. Bürstenartige Dichtung nach Anspruch 8, **dadurch gekennzeichnet, dass** der winklige Abschnitt in Richtung einer Mittelachse (23) der Dichtung absteht.

10. Bürstenartige Dichtung nach Anspruch 1, **dadurch gekennzeichnet, dass** die sich radial erstreckende Schnittstelle (15) mit Anlagerung eben ist.

11. Bürstenartige Dichtung nach Anspruch 1, **dadurch gekennzeichnet, dass** der erste Teil des Gehäuses ein Loch (19) aufweist, das bei Drehung der Dichtung die Aussparung für einen Arretierungsstift (27) nicht freigibt.

12. Bürstenartige Dichtung nach Anspruch 1, **dadurch gekennzeichnet, dass** das Gehäuse externe Dichtungsmittel umfasst.

13. Bürstenartige Dichtung nach Anspruch 12, **dadurch gekennzeichnet, dass** die Dichtungsmittel hervorstehende Erhöhungen umfassen.

14. Bürstenartige Dichtung nach Anspruch 13, **dadurch gekennzeichnet, dass** die Erhöhungen Schneiden (28) mit dreieckigem Querschnitt umfassen.

15. Bürstenartige Dichtung nach Anspruch 13, **dadurch gekennzeichnet, dass** die Erhöhungen eine verformbare Lippe (31) umfassen.

## Claims

1. A brush-type circular composite seal, comprising:
- a circular casing made of two crimped portions, a first portion of which, called a cage (1), comprising a cylindrical part (6) and a radial return joined to the cylindrical part and comprising a first radial bearing face (9) internal to the casing, and a second portion, called a chock (2), centred on the cylindrical part (6), radially extending and comprising a second bearing face (10) internal to the casing and facing the first bearing face (9);
- a composite structure consisting in a core (24) internal to the casing and a network of bristles disposed into a winding (20) around the core (24) and comprising two parallel strands (21, 22) coming out of the casing between the cage (1) and the chock (2);
**characterised in that**:
- the cylindrical part (6) and the chock (2) have a mutual stop radially extending interface (15);
- the winding (20) is in contact with the bearing faces (9, 10);
- and the bearing faces (9, 10) are curved into concave tubs, having radiuses of curvature at least equal to the one of the winding (20).

2. The brush-type seal according to claim 1, **characterised in that** the core (24) is metallic and with a hollow section.

3. The brush-type seal according to claim 2, **characterised in that** the core is made of a coiled spring (5) and an open section cover (4) surrounding the spring.

4. The brush-type seal according to claim 1, 2 or 3, **characterised in that** the tubs have bottoms separated by a distance lower than a free external diameter of the winding at an assembling position of the casing, a clearance remaining between the winding (20) and the cylindrical part (6).

5. The brush-type seal according to claim 1, **characterised in that** the tubs are symmetrical and have bottoms (16, 17) situated, as well as a centre of the core and of the winding, at a same distance from a seal central axis.

6. The brush-type seal according to claim 1, **characterised in that** the cage and the chock each comprise a lip (11, 12), the lips flanking the bristle strands by extending parallel to each other and radially opposite the cylindrical part (6).

7. The brush-type seal according to claim 1, **characterised in that** the cylindrical part comprises a recess the bottom of which is formed by the mutual stop radially extending interface (15), and which is bounded by a terminal lip (7) of the cylindrical part, the chock (2) being surrounded by the terminal lip and in contact with the same by a peripheral interface (6b), the terminal lip being curved by covering a rim of a face of the chock which is opposite the second bearing face and external to the casing.

8. The brush-type seal according to claim 7, **characterised in that** the chock has at least one angular portion (8b) at the peripheral interface.

9. The brush-type seal according to claim 8, **characterised in that** the angular portion is protruding in the direction of a seal central axis (23).

10. The brush-type seal according to claim 1, **characterised in that** the stop radially extending interface (15) is planar.

11. The brush-type seal according to claim 1, **characterised in that** the first portion of the casing comprises a blind hole (19) housing a rotation locking pin (27) of the seal.

12. The brush-type seal according to claim 1, **characterised in that** the casing comprises external sealing means.

13. The brush-type seal according to claim 12, **characterised in that** the sealing means comprise protruding reliefs.

14. The brush-type seal according to claim 13, **characterised in that** the reliefs comprise triangular section knives (28).

15. The brush-type seal according to claim 13, **characterised in that** the reliefs comprise a deformable lip (31).
